# FASCICULE DE BREVET EUROPEEN

(11) **EP 1 457 684 B1**
(45) Date de publication et mention de la délivrance du brevet: **26.09.2007**
(21) Numéro de dépôt: 04290689.1
(22) Date de dépôt: 12.03.2004
(51) Int. Cl.: F04D 29/64, F04D 29/58, B62D 25/08

(54) **Ensemble de ventilation à collier de serrage radial du moteur du ventilateur, module de refroidissement de bloc avant et véhicule automobile correspondants**
Kühleranlage mit radialem Spannungsring für den Ventilatormotor, Kühlermodule für ein Frontteil, und derartiges Kraftfahrzeug
Cooling unit with radial tension ring for the ventilator motor, cooling unit for front part, and vehicle equipped with such a cooling unit

(30) Priorité: 14.03.2003 FR 0303190
(43) Date de publication de la demande: 15.09.2004
(73) Titulaire: Faurecia Cooling Systems, 92000 Nanterre (FR)
(72) Inventeur: Lucbernet, Bruno, 25230 Seloncourt (FR); Maillard, Jérôme, 25190 Chamesol (FR); Negre, David, 25230 Seloncourt (FR); Texier, Eric, 25230 Mandeure (FR)
(74) Mandataire: Domenego, Bertrand

(56) Documents cités:
- EP-A- 0 838 626
- EP-A- 1 320 172
- DE-A- 10 048 245
- US-A- 5 492 456

## Description

La présente invention concerne un module de refroidissement selon le préambule de la revendication 1.

L'invention s'applique plus précisément à la ventilation des radiateurs de refroidissement des moteurs thermiques des véhicules.

DE-100 48 245 et FR-2 766 235 décrivent des modules du type précité. Dans ce dernier document, le support comprend un secteur d'anneau qui reçoit avec un jeu radial le moteur du ventilateur. Le moteur est fixé sur le support grâce à des vis traversant des pattes prolongeant le boîtier du moteur.

La fixation du moteur sur le support nécessite donc de prévoir des pattes de fixation sur son boîtier, et d'assurer, pour chacune de celles-ci, une opération de vissage et de contrôle du couple de vissage appliqué.

Le coût associé à la fixation du ventilateur sur le support est donc relativement élevé.

Un but de l'invention est de résoudre ce problème en fournissant un module du type précité où le coût lié à la fixation du ventilateur sur son support est réduit.

A cet effet, l'invention a pour objet un module selon la revendication 1. Selon des modes particuliers de réalisation, le module peut comprendre l'une ou plusieurs des caractéristiques des revendications 2 à 14.

L'invention a en outre pour objet un véhicule automobile, selon la revendication 15.

L'invention sera mieux comprise à la lecture de la description qui va suivre, donnée uniquement à titre d'exemple, et faite en se référant aux dessins annexés, sur lesquels :
- la figure 1 est une vue schématique latérale, partiellement en coupe, du module de refroidissement du bloc avant d'un véhicule automobile selon un premier mode de réalisation de l'invention,
- la figure 2 est une vue schématique en perspective, prise depuis l'avant, du ventilateur (hélice non-représentée) et du support de ventilateur du module de refroidissement du bloc avant de la figure 1,
- les figures 3 et 4 sont des vues partielles, schématiques, agrandies et en perspective prises depuis l'arrière, illustrant des variantes du mode de réalisation des figures 1 et 2,
- les figures 5 et 6 sont des vues partielles, schématiques, agrandies et en perspective prises depuis l'avant, illustrant deux variantes d'un deuxième mode de réalisation de l'invention, et
- la figure 7 est une vue partielle, schématique, agrandie et en perspective éclatée prise depuis l'avant et le dessus, et illustrant un troisième mode de réalisation de l'invention.

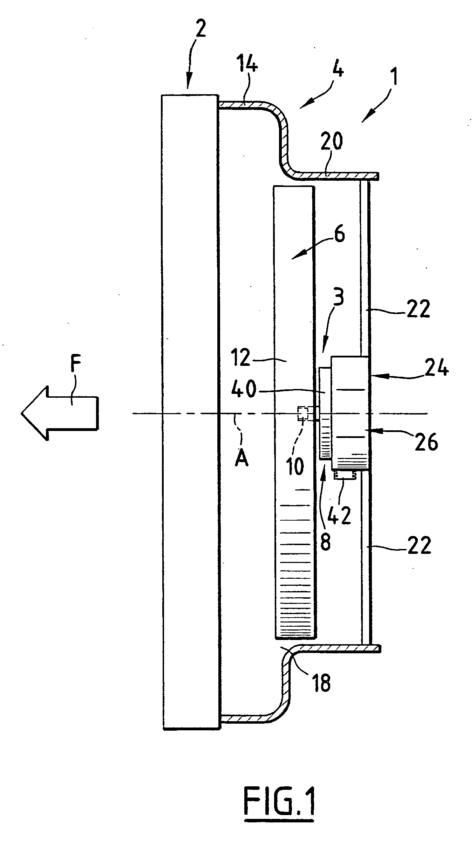

Dans tout ce qui suit, les orientations utilisées sont les orientations habituelles d'un véhicule automobile. En particulier, les termes « avant » et « arrière » s'entendent par rapport à la position du conducteur et au sens de marche du véhicule qui est matérialisé par la flèche F sur la figure 1.

La figure 1 illustre un module 1 de refroidissement d'un bloc avant d'un véhicule automobile comprenant un échangeur de chaleur 2, un ventilateur 3 disposé en arrière de l'échangeur 2 et un support 4 de montage du ventilateur 3 sur l'échangeur de chaleur 2.

L'échangeur de chaleur 2 est un radiateur de refroidissement du moteur thermique du véhicule automobile. Cet échangeur de chaleur 2 est typiquement de forme générale parallélépipédique et de faible épaisseur. L'échangeur de chaleur 2 est disposé sensiblement verticalement et transversalement au sens de marche F. L'échangeur de chaleur 2 comprend de manière classique deux boîtes collectrices d'un fluide de refroidissement du moteur thermique, un faisceau de tubes reliant ces boîtes collectrices, et, par exemple, des ailettes s'étendant entre les tubes. Les boîtes collectrices sont par exemple disposées latéralement. Une telle structure étant classique, les éléments mentionnés ci-dessus n'ont pas été représentés sur la figure 1.

Le ventilateur 3 comprend une hélice 6 et un moteur électrique 8 dont un arbre de sortie 10 est relié à l'hélice 6 pour l'entraîner en rotation autour de son axe A qui est sensiblement horizontal.

De manière classique, l'hélice 6 peut comprendre un moyeu central par lequel elle est reliée à l'arbre de sortie 10 et des pales qui prolongent radialement le moyeu vers l'extérieur. Les extrémités radialement extérieures des pales sont dans l'exemple représenté reliées entre elles par une virole circulaire 12. Toutefois, une telle virole 12 n'est pas nécessairement présente.

Les pales de l'hélice 6 sont orientées pour créer un écoulement d'air s'écoulant vers l'arrière et donc aspirer de l'air au travers de l'échangeur de chaleur 2. Le ventilateur 3 est alors dans une configuration généralement dénommée configuration « aspirante ».

Classiquement, le ventilateur 3 permet d'améliorer par convection forcée l'échange de chaleur entre l'air extérieur et le fluide de refroidissement du moteur thermique circulant dans l'échangeur de chaleur.

Le support 4 comprend un carénage 14 de canalisation de l'écoulement d'air créé par le ventilateur 3. Ce carénage recouvre la face arrière de l'échangeur de chaleur 2.

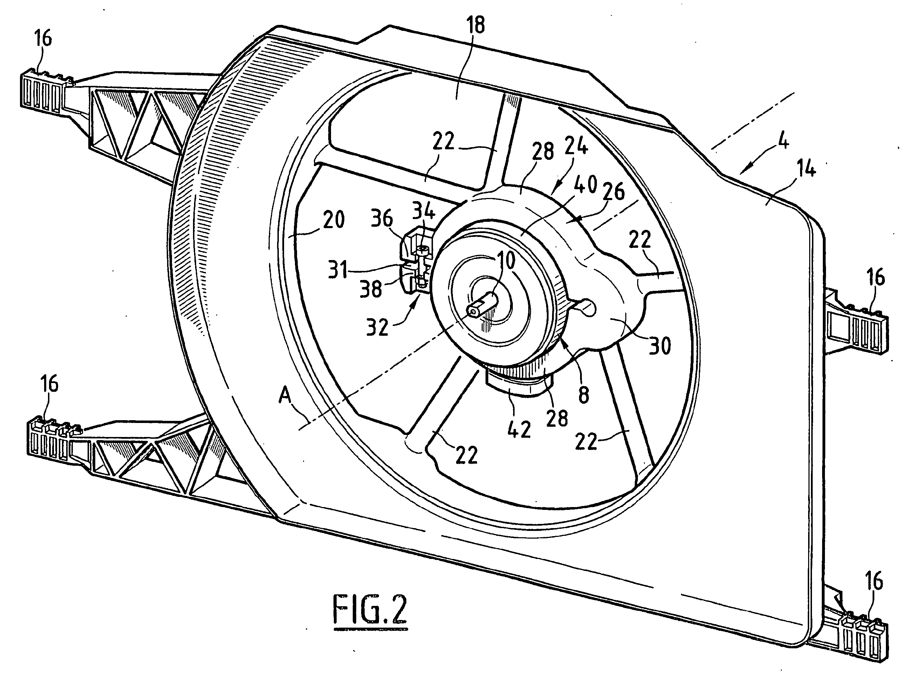

Comme on le voit sur la figure 2, le carénage 14 est prolongé latéralement de chaque côté par deux pattes de fixation 16 disposées l'une au-dessus de l'autre.

Chaque patte 16 a été engagée par déplacement vertical vers le bas dans des logements de réception (non-représentés) prévus sur les boîtes collectrices de l'échangeur de chaleur 2.

Ainsi, le support 4 est fixé sur l'échangeur de chaleur 2.

Une ouverture centrale circulaire 18 est ménagée dans le carénage 14. Le carénage 14 est prolongé, autour de l'ouverture 18, par une jupe circulaire 20 qui s'étend vers l'arrière. L'hélice 6 est logée dans cette jupe 20.

Le support 4 comprend des bras 22 qui s'étendent depuis la jupe 20 vers le centre de l'ouverture 18. Les extrémités radialement intérieures des bras 22 sont reliées à des moyens 24 de fixation du ventilateur 3 sur le support 4.

Ces moyens de fixation 24 comprennent un collier 26 dont deux demi-colliers 28 sont reliés par une région d'articulation 30 latérale. Une fente 31 est prévue à l'opposé de la région d'articulation 30 et délimite les deux demi-colliers 28.

Grâce à la région l'articulation 30, les deux demi-colliers 28 sont mobiles l'un par rapport à l'autre entre une position écartée et une position rapprochée illustrée par la figure 2. Le carénage 14, les pattes 16, les bras 22 et le collier 26 sont par exemple réalisés d'une seule pièce en matière plastique.

Les moyens 24 de fixation comprennent au droit de la fente 31 des moyens 32 de rapprochement des deux demi-colliers 28. Ces moyens 32 comprennent un boulon 34 dont la vis prend appui sur un épaulement 36 solidaire du demi-collier 28 supérieur et dont l'écrou prend appui sur un épaulement 38 solidaire du demi-collier 28 inférieur.

Le moteur 8 est disposé dans le collier 26 entre les deux demi-colliers 28 et le boulon 34 a été vissé pour que les demi-colliers 28 soient en position rapprochée. Le collier 26 enserre alors la paroi latérale 40 du boîtier ou culasse du moteur 8 sur laquelle elle produit des efforts radiaux orientés vers l'intérieur.

Le moteur 8 est ainsi fixé axialement et angulairement par rapport au support 4.

On notera que le demi-collier 28 inférieur comporte un dégagement de réception d'une fiche 42 de raccordement électrique du moteur 8 à une source électrique.

La fixation du ventilateur 3 sur le support 4 ne nécessite donc qu'un seul vissage et n'impose pas que le boîtier du moteur 8 soit muni de pattes de fixation.

Les coûts associés à la fixation du ventilateur 3 sont donc réduits.

Si l'on veut fixer un moteur 8 de taille plus réduite sur le support 4 représenté, il est possible d'entourer la paroi latérale 40 de son boîtier d'une bague d'adaptation qui sera alors interposée entre le collier 26 et le moteur 8. Le collier 26 exercera alors ses efforts radiaux de serrage directement sur cette bague d'adaptation.

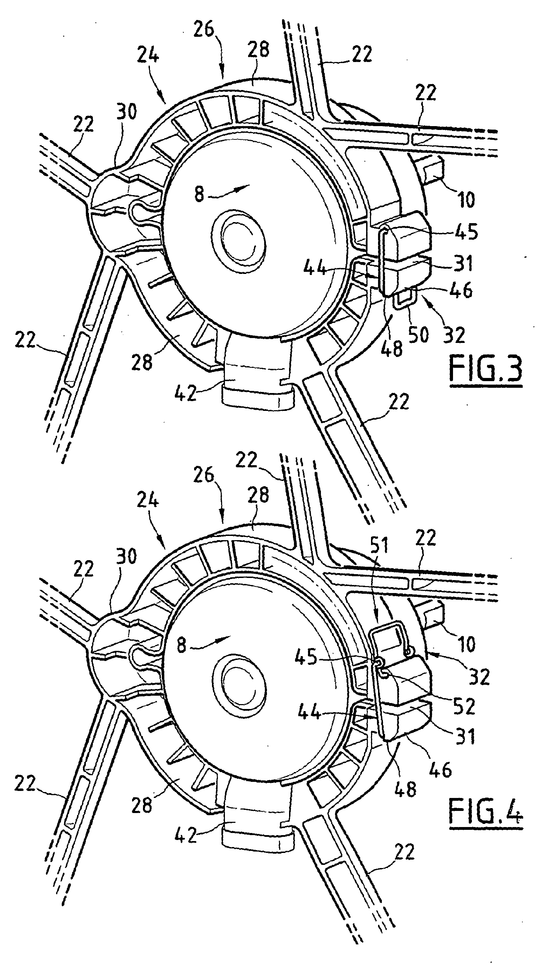

La figure 3 illustre une variante qui se distingue du mode de réalisation des figures 1 et 2 par la nature des moyens de rapprochement 32 qui sont des moyens de rapprochement par encliquetage.

Ces moyens 32 de rapprochement comprennent une agrafe 44 articulée par une partie supérieure 45 sur le demi-collier 28 supérieur. La région inférieure de l'agrafe 44 est susceptible de s'engager, après passage sur une surface de rampe 46, derrière un rebord de retenue 48 solidaire du demi-collier 28 inférieur. C'est dans cette position que l'agrafe 44 est représentée sur la figure 3.

L'agrafe 44 comprend une partie inférieure de saisie 50 qui permet de libérer l'agrafe 44 du rebord 48 et de l'éloigner du demi-collier 28 inférieur par pivotement par rapport au demi-collier 28 supérieur. Les demi-colliers 28 reviennent alors élastiquement vers leur position écartée. Dans cette position, le moteur 8 peut être inséré ou retiré du collier 26.

Lorsque l'agrafe 44 est engagée derrière le rebord 48, les demi-colliers 28 sont en position rapprochée. Le collier 26 assure ainsi un serrage radial du moteur 8 qui est fixé par rapport au support 4.

Cette variante ne fait intervenir aucune opération de vissage pour fixer le ventilateur 3 sur le support 4. Les coûts associés à cette fixation sont donc encore plus réduits.

La figure 4 illustre une autre variante qui se distingue de celle de la figure 3 par le fait que les moyens 32 de rapprochement comprennent un mécanisme à franchissement de point dur.

Plus précisément, la partie supérieure 45 de l'agrafe 44 est alors articulée sur une pièce 51 de manoeuvre qui est elle-même articulée par une partie inférieure 52 sur le demi-collier 28 supérieur. Les parties d'articulation 45 et 52 sont espacées l'une de l'autre pour que l'agrafe 44 et la pièce de manoeuvre 51 forment un mécanisme à franchissement de point dur. L'agrafe 44 ne comprend plus de région de saisie.

Dans la position représentée sur la figure 4, l'agrafe 44 est engagée derrière le rebord de retenue 48 et maintient les demi-colliers 28 en position rapprochée. Le collier 26 serre alors radialement le moteur 8 en assurant sa fixation par rapport au support 4.

Pour libérer le moteur 8, on fait pivoter la pièce de manoeuvre 51 vers la droite sur la figure 4.

Au cours d'un tel mouvement de pivotement le mécanisme va passer par une position de point dur, puis on pourra dégager l'agrafe 44 du rebord 48. Les demi-colliers 28 reviendront alors élastiquement vers leur position écartée. Le moteur 8 pourra ainsi être retiré. L'insertion du moteur 8 dans le collier 26 s'effectue également avec les demi-colliers 28 en position écartée.

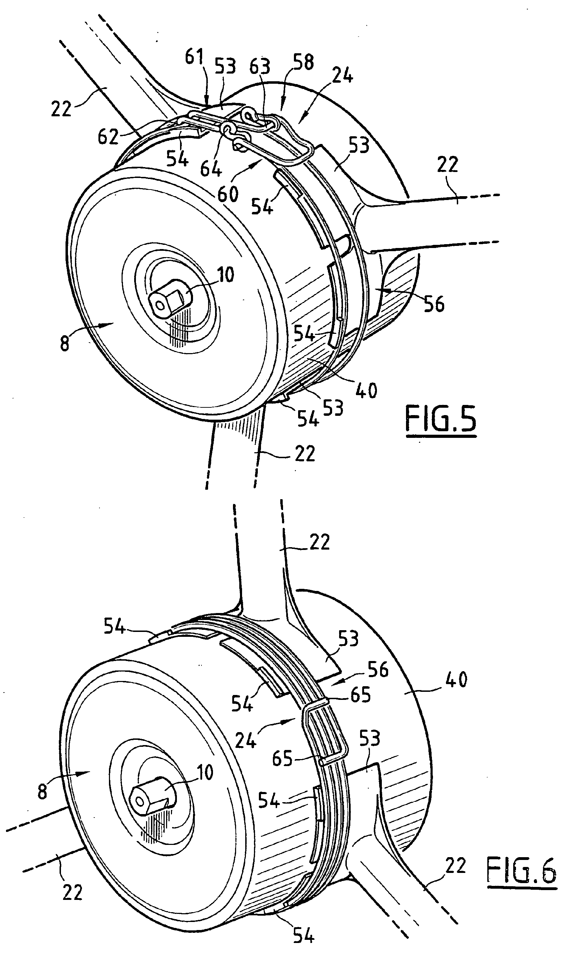

La figure 5 illustre un deuxième mode de réalisation de l'invention.

Sur la figure 5, seuls trois bras 22 sont représentés, au lieu des cinq bras 22 des figures précédentes. Toutefois, les principes décrits par la suite peuvent être appliqués avec un nombre différent de bras 22.

Chaque bras 22 est prolongé par une semelle 53 d'appui sur la paroi latérale 40 du boîtier du moteur 8. Cette semelle 53 est venue de matière avec le bras 22 . Les semelles 53 ont des formes générales en secteurs d'anneaux.

Les semelles 53 présentent des rebords avant 54 en saillie radialement vers l'extérieur. Les semelles 53 sont reliées par leurs régions arrière aux bras 22.

Les moyens de fixation 24 du moteur 8 au support 4 comprennent, outre les semelles 53, un collier de serrage 56, par exemple en fil métallique, qui entoure extérieurement les semelles 53. Les bras 22 et les rebords 54 retiennent axialement le collier 56 par rapport au support 4.

Le collier 56 comprend des moyens 58 de mise sous tension. Ces moyens 58 sont, dans l'exemple représenté, des moyens à franchissement de point dur qui comprennent une pièce de manoeuvre 60 et une pièce de liaison 61.

La pièce de liaison 61 est articulée par une partie 62 à une première extrémité du collier 56 et par une partie 63 opposée à la pièce de manoeuvre 60. La pièce de manoeuvre 60 est articulée par une partie 64 à l'autre extrémité du collier 56. Les parties d'articulation 63 et 64 sont espacées l'une de l'autre.

Dans la position illustrée par la figure 5, le collier 56 est tendu par les moyens 58 et exerce via les semelles 53 des efforts de serrage radiaux sur la paroi latérale 40 du moteur 8, de sorte que le moteur 8 est fixé par rapport au support 4.

Pour libérer le moteur 8, on fait pivoter la pièce de manoeuvre 60 vers le haut sur la figure 5. Après franchissement d'un point dur, le collier 56 n'est plus tendu et les semelles 53 ne sont plus appliquées contre la paroi latérale 40 du moteur 8. Le moteur 8 peut alors être dégagé.

L'insertion du moteur 8 dans le collier 56 s'effectue également avec le collier 56 détendu.

D'autres moyens 58 de mise sous tension que des moyens à franchissement de point dur peuvent être utilisés, tels que des moyens à crans.

De même, le collier 56 n'est pas nécessairement un collier en fil métallique. Il peut s'agir de tout autre type de collier.

La figure 6 illustre, sous un autre angle de vue, une autre variante de ce deuxième mode de réalisation dans laquelle le collier 56 est constitué par un ressort hélicoïdal dont les deux extrémités 65 sont courbées pour pouvoir être saisies.

Lorsqu'on rapproche ces extrémités 65 contre l'action de rappel élastique du collier 56, le collier 56 se détend et relâche son étreinte, de sorte que le moteur 8 peut être dégagé du collier 56 ou inséré dans celui-ci.

A l'inverse, lorsque aucun effort n'est appliqué sur les extrémités 65, le collier 56 revient élastiquement en position tendue et plaque les semelles 53 contre la paroi latérale 40 du moteur 8. Le moteur 8 est ainsi fixé par rapport au support 4.

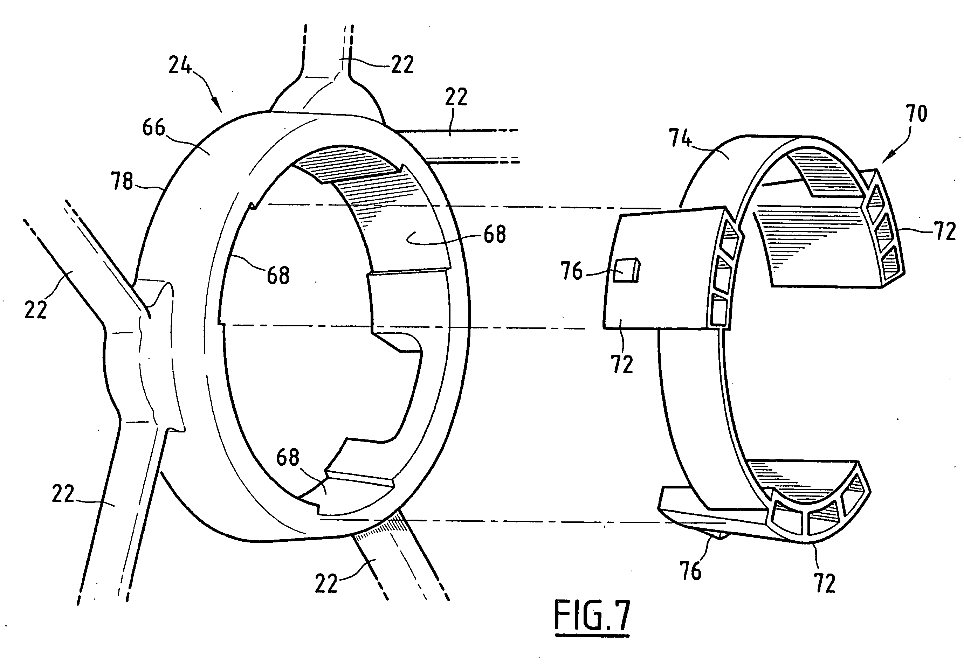

La figure 7 illustre un troisième mode de réalisation qui se distingue de celui de la figure 1 en ce que les moyens 24 de fixation du moteur 8 comprennent un collier rigide circulaire 66 qui relie les extrémités radialement intérieures des bras 22. Trois rainures 68 sont ménagées à l'intérieur de ce collier 66. Ces rainures 68 s'étendent axialement et sont, par exemple, décalées angulairement d'environ 120° l'une par rapport à l'autre.

Les moyens 24 de fixation comprennent en plus du collier de serrage 66 une cale de coincement 70 qui comprend trois coins 72 reliés par une bande 74.

On notera que la bande 74 ne s'étend pas entre deux coins 72 pour autoriser la réduction du diamètre de la cale de coincement 70 au moment du serrage et permettre le passage de la fiche 42 de raccordement du moteur électrique 8. On notera que les trois rainures 68 sont un peu plus larges que les coins 72 afin d'autoriser le débattement de ceux-ci lors du serrage.

Les coins 72 ont une forme convergente de sorte que leur épaisseur radiale diminue de l'avant vers l'arrière. Ces coins 72 sont pourvus de doigts 76 d'encliquetage en saillie vers l'extérieur.

Pour fixer le moteur 8 sur le support 4, on insère le moteur 8 dans le collier 66 puis on introduit axialement la cale 70 en la déplaçant vers l'arrière. Les coins 72 coulissent alors dans les rainures 68 jusqu'à ce que les reliefs d'encliquetage 76 viennent s'engager derrière la tranche arrière 78 du collier 66. La cale 70 est alors retenue par les doigts 76 par rapport au collier 66 contre un déplacement vers l'avant. Le collier 66 serre alors radialement, via la cale 70, la paroi latérale 40 du moteur 8.

Le moteur 8 est alors fixé rigidement par rapport au support 4. Un déplacement vers l'arrière de la cale 70 conduirait à un serrage encore plus important du moteur 8 du fait de la forme des coins. La fixation du moteur 8 est donc satisfaisante.

De manière plus générale, les principes ci-dessus peuvent s'appliquer à des modules 1 de refroidissement de blocs avant dans lesquels le ventilateur 3 n'est pas en configuration « aspirante » mais en configuration « soufflante » avec le ventilateur 3 disposé devant l'échangeur de chaleur 2.

## Revendications

1. Module (1) de refroidissement d'un bloc avant de véhicule automobile comprenant un radiateur de refroidissement du moteur thermique du véhicule automobile et un ensemble de ventilation, l'ensemble de ventilation comprenant un ventilateur (3), un support (4) de montage du ventilateur (3) dans un véhicule automobile et des moyens (24) de fixation du ventilateur sur le support de montage (4), le ventilateur comprenant une hélice (6) et un moteur (8) d'entraînement en rotation de l'hélice (6), **caractérisé en ce que** les moyens (24) de fixation comprennent un collier (26 ; 56 ; 66) de serrage radial du moteur (8).

2. Module selon la revendication 1, dans lequel le collier (26) comprend au moins deux parties (28) mobiles l'une par rapport à l'autre et des moyens (32) de rapprochement des deux parties mobiles.

3. Module selon la revendication 2, dans lequel les moyens (32) de rapprochement comprennent une vis (34) (fig. 2).

4. Module selon la revendication 2, dans lequel les moyens (32) de rapprochement sont des moyens de rapprochement par encliquetage (fig. 3).

5. Module selon la revendication 2, dans lequel les moyens (32) de rapprochement sont des moyens à franchissement de point dur (fig. 4).

6. Module selon l'une des revendications 2 à 5, dans lequel le collier (26) présente une fente (31) délimitant les deux parties mobiles (28).

7. Module selon la revendication 1, dans lequel les moyens (24) de fixation comprennent en outre une cale de coincement (70) destinée à être insérée entre le moteur (8) et le collier (66) pour serrer radialement le moteur (8) (fig. 7).

8. Module selon la revendication 7, dans lequel le collier (66) est sensiblement rigide.

9. Module selon l'une des revendications 2 à 8, dans lequel le collier de serrage (26 ; 66) est venu de matière avec le support (4).

10. Module selon la revendication 1, dans lequel le collier (56) est rapporté sur le support (4) et dans lequel le support (4) comprend des semelles (53) d'appui sur le moteur (8) interposées entre le collier de serrage (56) et le moteur (8).

11. Module selon la revendication 10, dans lequel le collier de serrage (56) comprend des moyens (58) de mise sous tension (fig. 5).

12. Module selon la revendication 11, dans lequel les moyens (58) de mise sous tension sont des moyens à franchissement de point dur.

13. Module selon la revendication 10, dans lequel le collier de serrage (56) est un ressort de serrage radial du moteur (8) (fig. 6).

14. Module selon l'une des revendications 10 à 13, dans lequel les semelles (53) sont venues de matière avec le support (4).

15. Véhicule automobile, **caractérisé en ce qu'**il comprend un module selon l'une des revendications précédentes.

## Claims

1. Module (1) for cooling a front unit of a motor vehicle, comprising a radiator for cooling the heat engine of the motor vehicle, and a ventilation assembly, the ventilation assembly comprising a fan (3), a support (4) for mounting the fan (3) in a motor vehicle and means (24) for securing the fan to the mounting support (4), the fan comprising a helix (6) and a motor (8) for driving the helix (6) in rotation, **characterised in that** the securing means (24) comprise a collar (26; 56; 66) for the radial clamping of the motor (8).

2. Module according to claim 1, wherein the collar (26) comprises at least two portions (28) which are mobile relative to each other and means (32) for causing the two mobile portions to approach each other.

3. Module according to claim 2, wherein the approach means (32) comprise a screw (34) (Figure 2).

4. Module according to claim 2, wherein the approach means (32) are means for approach by snapping-in (Figure 3).

5. Module according to claim 2, wherein the approach means (32) are an over-centre mechanism (Figure 4).

6. Module according to any one of claims 2 to 5, wherein the collar (26) has a slot (31) delimiting the two mobile portions (28).

7. Module according to claim 1, wherein the securing means (24) also comprise a wedging block (70) which is to be inserted between the motor (8) and the collar (66) in order to clamp the motor (8) radially (Figure 7).

8. Module according to claim 7, wherein the collar (66) is substantially rigid.

9. Module according to any one of claims 2 to 8, wherein the clamping collar (26; 66) is integral with the support (4).

10. Module according to claim 1, wherein the collar (56) is fitted on the support (4) and wherein the support (4) comprises flanges (53) for bearing on the motor (8), which flanges are interposed between the clamping collar (56) and the motor (8).

11. Module according to claim 10, wherein the clamping collar (56) comprises tensioning means (58) (Figure 5).

12. Module according to claim 11, wherein the tensioning means (58) are an over-centre mechanism.

13. Module according to claim 10, wherein the clamping collar (56) is a spring for the radial clamping of the motor (8) (Figure 6) .

14. Module according to any one of claims 10 to 13, wherein the flanges (53) are integral with the support (4).

15. Motor vehicle, **characterised in that** it comprises a module according to any one of the preceding claims.

## Patentansprüche

1. Kühlmodul (1) eines Vorbaus eines Kraftfahrzeugs, aufweisend: eine Kühlvorrichtung des Verbrennungsmotors des Kraftfahrzeugs und einen Lüfteraufbau, wobei der Lüfteraufbau einen Lüfter (3), einen Träger (4) zum Montieren des Lüfters (3) in einem Kraftfahrzeug, und Mittel (24) zum Befestigen des Lüfters (3) auf dem Montageträger (4) aufweist, wobei der Lüfter ein Flügelrad (6) und einen Motor (8) zum Drehantrieb des Flügelrades (6) aufweist, **dadurch gekennzeichnet, dass** die Befestigungsmittel (24) eine Schelle (26; 56; 66) zum radialen Anpressen des Motors (8) aufweisen.

2. Modul nach Anspruch 1, wobei die Schelle (26) mindestens zwei im Verhältnis zu einander bewegliche Teile (28), und Mittel (32) zur Annäherung der beiden beweglichen Teile aufweist.

3. Modul nach Anspruch 2, wobei die Annäherungsmittel (32) eine Schraube (34) aufweisen (Figur 2).

4. Modul nach Anspruch 2, wobei die Annäherungsmittel (32) Mittel zur Annäherung durch Verklinken sind (Figur 3).

5. Modul nach Anspruch 2, wobei die Annäherungsmittel (32) Mittel zur Druckpunktüberschreitung sind (Figur 4).

6. Modul nach einem der Ansprüche 2 bis 5, wobei die Schelle einen Spalt (31) aufweist, welcher die beiden beweglichen Teile (28) abgrenzt.

7. Modul nach Anspruch 1, wobei die Befestigungsmittel (24) ferner einen Klemmkeil (70) aufweisen, der dazu bestimmt ist, zwischen dem Motor (8) und der Schelle (66) angeordnet zu werden, um den Motor (8) radial festzuhalten. (Figur 7).

8. Modul nach Anspruch 7, wobei die Schelle (66) im Wesentlichen starr ist.

9. Modul nach einem der Ansprüche 2 bis 8, wobei die Klemmschelle (26, 66) aus einem Material mit dem Träger (4) ist.

10. Modul nach Anspruch 1, wobei die Schelle (56) auf den Träger (4) aufgesetzt ist, und wobei der Träger (4) Platten (53) zum Aufliegen auf dem Motor (8) aufweist, die zwischen der Klemmschelle (56) und dem Motor (8) angeordnet sind.

11. Modul nach Anspruch 10, wobei die Klemmschelle (56) Spannmittel (58) aufweist (Figur 5).

12. Modul nach Anspruch 11, wobei die Spannmittel (58) Mittel zur Druckpunktüberschreitung sind.

13. Modul nach Anspruch 10, wobei die Klemmschelle (56) eine Feder zum radialen Festhalten des Motors (8) ist (Figur 6).

14. Modul nach einem der Ansprüche 10 bis 13, wobei die Platten (53) aus einem Material mit dem Träger (4) sind.

15. Kraftfahrzeug, **dadurch gekennzeichnet, dass** es ein Modul nach einem der vorhergehenden Ansprüche aufweist.
